# EUROPÄISCHE PATENTSCHRIFT

(11) **EP 3 774 489 B1**
(45) Veröffentlichungstag und Bekanntmachung des Hinweises auf die Patenterteilung: **13.09.2023**
(21) Anmeldenummer: 19727838.5
(22) Anmeldetag: 08.05.2019
(51) Int. Cl.: B61L 27/40, B61L 27/57, B61L 15/00

(54) **SENSOR-ANALYSE-VERFAHREN, COMPUTER-PROGRAMM-PRODUKT ZUR SENSOR-ANALYSE, FAHRGASTZÄHLSYSTEM UND FAHRZEUG ZUR FAHRGASTBEFÖRDERUNG, INSBESONDERE IM SCHIENEN- UND STRASSENVERKEHR**
SENSOR ANALYSIS METHOD, COMPUTER PROGRAM PRODUCT FOR SENSOR ANALYSIS, PASSENGER COUNTING SYSTEM, AND VEHICLE FOR TRANSPORTING PASSENGERS, IN PARTICULAR IN RAIL AND ROAD TRANSPORT
PROCÉDÉ D'ANALYSE DE CAPTEURS, PRODUIT-PROGRAMME INFORMATIQUE POUR L'ANALYSE DE CAPTEURS, SYSTÈME DE COMPTAGE DE PASSAGERS ET VÉHICULE DE TRANSPORT DE PASSAGERS, EN PARTICULIER DANS LE TRAFIC ROUTIER ET FERROVIAIRE

(30) Priorität: 29.05.2018 DE 102018208523
(43) Veröffentlichungstag der Anmeldung: 17.02.2021
(73) Patentinhaber: Siemens Mobility GmbH, 81739 München (DE)
(72) Erfinder: SCHÖNBERGER, Andreas, 96049 Bamberg (DE); BECK, Anita, 91301 Forchheim (DE); RICHTER, Martin, 90461 Nürnberg (DE)
(74) Vertreter: Siemens Patent Attorneys
(86) Internationale Anmeldenummer: PCT/EP2019/061862
(87) Internationale Veröffentlichungsnummer: WO 2019/228772

(56) Entgegenhaltungen:
- WO-A1-2013/088620
- WO-A1-2015/161992
- DE-A1-102014 215 857
- US-A1- 2015 286 936

## Beschreibung

Die Erfindung bezieht sich auf ein Sensor-Analyse-Verfahren gemäß dem Oberbegriff des Patentanspruches 1, ein Computer-Programm-Produkt zur Sensor-Analyse gemäß dem Oberbegriff des Patentanspruches 6, ein Fahrgastzählsystem gemäß dem Oberbegriff des Patentanspruches 11 und ein Fahrzeug zur Fahrgastbeförderung, insbesondere im Schienen- und Straßenverkehr gemäß dem Oberbegriff des Patentanspruches 21.

In Fahrzeugen zur Fahrgastbeförderung, wie sie z.B. im Schienen- und Straßenverkehr zum Einsatz kommen, werden in der Regel automatische Fahrgastzählsysteme Zählsensoren, wie z.B. Lichtschranken oder Stereokameras im Türbereich, insbesondere an Außentüren und/oder Innentüren, sowie Raumkameras im Innenbereich eingesetzt. Die Aufgabe derartiger Zählsensoren in den Fahrgastzählsystemen ist es, das Einsteigen/Aussteigen von Fahrgästen (z.B. Personen) pro Haltestation, Gesamtpersonenbeförderungszahlen zwecks Abrechnung, Belegungszahlen pro Wagen oder pro Fahrzeug, oder die Verteilung von Fahrgästen im Fahrzeug und damit Freikapazitäten in einzelnen Wagen zu ermitteln.

Hierbei treten folgende Probleme auf:
1. Die Zählsensoren unterliegen diversen Beeinträchtigungen wie Defekten, Alterung, Verschmutzung, Beschädigung etc., so dass die gelieferten Fahrgastzahlen (z.B. Ein- und Ausstiegszahlen, Zahlen pro Raum etc.) beliebig ungenau werden können. Sofern der Zählsensor jedoch nicht komplett ausfällt oder auffällig abnorme Werte liefert, ist die Detektion einer Beeinträchtigung sehr schwierig.
2. Die Zählsensoren müssen je nach Sensortyp, so z.B. die Zählsensoren an den Türen oder die Innenraumkameras mit entsprechender Bildauswertungssoftware etc., in jedem relevanten Fahrzeugabschnitt, z.B. einem Fahrzeugwagen, verbaut werden, und zwar vorzugsweise an jeder Tür. Dies ist für eine Flotte von Fahrzeugen gegebenenfalls sehr kostenintensiv.
3. Sofern deshalb nur Zählsensoren an den Außentüren verwendet werden, ist es andererseits unmöglich, die Verteilung der Fahrgäste über die Wagen hinweg zu bestimmen.

Beeinträchtige Sensoren wurden bisher nur bei Totalausfall, bei Eigendiagnosemeldungen der Geräte oder durch Stichproben erkannt.

Darüber hinaus wurden solche Sensoren je nach Messziel (z.B. Anzahl der Ein- und Ausstiege insgesamt oder pro Wagen) für jeden relevanten Fahrzeugabschnitt komplett installiert - z.B. an jeder einzelnen Außentür, wenn Zu- und Ausstiege gemessen werden sollen.

Fahrgastverteilungen wurden jedoch nur dann berechnet, wenn Innenraumkameras mit entsprechender Bildauswertungssoftware, Sitzsensoren oder Innentürsensoren verbaut wurden.

Aus der US 2015/286936 A1 ist ein Transport-Analyse-System bekannt, bei dem aktuell verfügbare Transport-Dienste über eine Vielzahl von Transporteinrichtungen, z.B. Autos, Triebwagen und/oder öffentliche Verkehrseinrichtungen, in einem weiten Bereich durch Schätzung von Ankunfts- und Abfahrtszeiten der Transporteinrichtungen aus Nutzungsstatusinformationen eines Benutzers, wie z.B. Einstiegsort, Einstiegszeit, Ausstiegsort und Ausstiegszeit, die von einem Transportsystem-IC-Transitkarte usw. gesammelt werden, wenn der Benutzer die Transporteinrichtung benutzt wird, zusammengestellt werden und ein Zeitplan zum Anzeigen des aktuell verfügbare Transport-Dienstes angezeigt wird.

Die der Erfindung zugrundeliegende Aufgabe besteht darin, ein Sensor-Analyse-Verfahren, ein Computer-Programm-Produkt zur Sensor-Analyse, ein Fahrgastzählsystem und ein Fahrzeug zur Fahrgastbeförderung, insbesondere im Schienen- und Straßenverkehr, anzugeben, mit dem auf einfache und kostengünstige Weise Beeinträchtigungen einzelner, zur Fahrgastzählung eingesetzter Zählsensoren frühzeitig erkannt werden können, die Anzahl der Zählsensoren für eine gegebene Zählgenauigkeit reduziert werden kann und fahrzeugspezifische Fahrgastverteilungen ohne zusätzlich benötigte Infrastruktur hierfür, z.B. zur Überwachung eines Fahrzeuginnenraums inklusive darin befindlicher Innentüren eingesetzter Sensoren oder Kameras, geschätzt werden können.

Diese Aufgabe wird ausgehend von dem im Oberbegriff des Patentanspruchs 1 definierten dem Sensor-Analyse-Verfahren durch die im Kennzeichen des Patentanspruches 1 angegebenen Merkmale gelöst.

Darüber hinaus wird die Aufgabe ausgehend von dem im Oberbegriff des Patentanspruchs 6 definierten Computer-Programm-Produkt zur Sensor-Analyse durch die im Kennzeichen des Patentanspruches 6 angegebenen Merkmale gelöst.

Weiterhin wird die Aufgabe ausgehend von dem im Oberbegriff des Patentanspruchs 11 definierten Fahrgastzählsystem durch die im Kennzeichen des Patentanspruches 11 angegebenen Merkmale gelöst.

Außerdem wird die Aufgabe ausgehend von dem im Oberbegriff des Patentanspruchs 21 definierten Fahrzeug zur Fahrgastbeförderung, insbesondere im Schienen- und Straßenverkehr, durch die im Kennzeichen des Patentanspruches 21 angegebenen Merkmale gelöst.

Die der Erfindung gemäß den unabhängigen Ansprüchen 1, 6, 11 und 21 zugrundeliegenden Idee besteht darin, über analytische Modelle Sensorwerte von Zählsensoren auf Fahrzeugen zur fahrstreckenbezogenen Fahrgastbeförderung, insbesondere im Schienen- und Straßenverkehr, (wie z.B. in Sensornachrichten enthaltene sensorspezifische Identifikationsinformationen, sensor- und fahrzeugspezifische Fahrgastzahlinformationen und Sensorstatusdaten), Strecken- und Fahrzeugdaten (wie z.B. sensorfahrzeug- und fahrstreckenspezifische Zusatzinformationen), aktuelle Fahrtdaten (wie z.B. zeit- und ortsspezifische Fahrtinformationen), aktuelle Fahrzeugdaten sowie mit den genannten Daten im Zusammenhang stehende Kontextdaten (wie z.B. mit den fahrstreckenspezifischen Zusatzinformationen und zeit- und ortsspezifischen Fahrtinformationen im Zusammenhang stehende Kontextinformation wie z.B. eine zu der fahrstreckenspezifischen Zusatzinformationen und den zeit- und ortsspezifischen Fahrtinformationen zu berücksichtigende Großveranstaltung) derart zu korrelieren, dass bei der darauf basierenden Analyse mindestens eines Zählsensors und jeweils gelieferter IST-Fahrgastzahlinformation
(1) auftretende Veränderungen oder Abweichungen an dem analysierten Zählsensor ermittelt und angezeigt werden,
(2) anhand der IST-Fahrgastzahlinformation Fahrgastzahlinformationen geschätzt werden, die an einer Stelle im Fahrzeug ohne Zählsensor auftreten, und/oder
(3) anhand der IST-Fahrgastzahlinformation auf eine Fahrgastverteilung im Fahrzeug geschlossen wird.

Durch eine derartig durchgeführte Analyse der vorstehend genannten Werte und Daten kann erreicht werden, dass:
- Defekte, Alterungen, und/oder Verschmutzungen der Zählsensoren frühzeitig erkannt werden können.
- Weniger Zählsensoren pro Fahrzeug verbaut werden müssen.
- Freie Kapazitäten im Fahrzeug auch ohne Sitzsensoren oder Innenraumkameras bestimmt werden können.

Die genannten analytischen Modelle basieren dabei auf Algorithmen zur Berechnung von Verteilungsstatistiken. So lässt sich mit einer ersten Verteilungsstatistik angeben, wie sich das Ein-/Aussteigen von Fahrgästen an Türen von Fahrzeugen, z.B. Schienenfahrzeugen, die entweder als einzelne Triebfahrzeuge oder im Verbund (Zug) mit einem Triebfahrzeug und mehreren Wagen (Waggons) zum Einsatz kommen, verteilt, während mit einer zweiten Verteilungsstatistik angegeben werden kann, wie sich die Fahrgäste in dem Fahrzeug verteilen.

Auf diese Weise lassen sich die in der Beschreibungseinleitung aufgezeigten Probleme lösen.

Mit den beiden Verteilungsstatistiken kann insbesondere festgestellt werden, dass die Verteilung der Fahrgäste über Türen
- beim Ein-/Aussteigen in das Fahrzeug,
- bei einem Wagenwechsel innerhalb des Fahrzeugs (wenn es sich bei dem Fahrzeug um einen Zug handelt) und
- bei der Wagenbelegung innerhalb des Zugs
bestimmten Verteilungsmustern folgt, die sich in Verteilungsstatistiken erfassen lassen und die von diversen Faktoren wie der Topologie des Fahrzeugs, der Position des Fahrzeugs relativ zum Bahnsteig und den Gegebenheiten der Haltestelle bestimmt werden.

Um eine solche statistische Auswertung vornehmen zu können, wird z.B. aus einer Vielzahl von Fahrzeugen, z.B. eine Flotte von Schienenfahrzeugen, eine Teilanzahl mit einer Maximalbestückung von Zählsensoren ausgestattet, wobei diese Zählsensoren alle relevanten Abschnitte in diesen Fahrzeugen, z.B. jede Tür und jeden Innenraumabschnitt, erfassen, die Fahrgäste zählen und entsprechende Sensorwerte liefern. Diese erfassten Werte werden gesammelt und aus ihnen die Verteilungsstatistiken berechnet.

Danach werden diese Verteilungsstatistiken mit den vorstehend genannten Daten, die als Messdaten bezeichnet werden und auf die diversen, ebenfalls vorstehend genannten Einflussfaktoren, wie z.B. den Fahrgastfluss, die Topologie des Fahrzeugs, die Fahrzeugposition relativ zum Bahnsteig, die Gegebenheiten einer Haltestelle, die Kontextinformationen z.B. bezüglich des Stattfindens einer Großveranstaltung, etc. korreliert, d.h. die Verteilungsstatistiken werden mit den Messdaten in Beziehung gesetzt und es wird ein Korrelationsgrad (der Grad der Korrelation) ermittelt.

Das alles findet in einem Fahrgastzählsystem mit einer Steuereinheit und einem darin realisierten Computer-Programm-Produkt zur Sensor-Analyse, den Zählsensoren und gegebenenfalls (gemäß "Option I" oder "Option II"; vgl. FIGUR) einer Fahrgastzähleinrichtung statt. Die Steuereinheit mit dem darin realisierten Computer-Programm-Produkt bildet dabei einerseits eine erste Funktionseinheit mit den Zählsensoren und andererseits eine zweite Funktionseinheit mit der Fahrgastzähleinrichtung.

Die Fahrgastzähleinrichtung gemäß der Option II ist vorzugsweise als eine "Cloud zum automatischen Zählen von Fahrgästen" ausgebildet und ist nicht Bestandteil des Fahrgastzählsystems, sondern befindet sich außerhalb des Fahrgastzählsystems.

Auf Basis dieser Verteilungsstatistiken kann aus den Zählwerten eines oder mehrerer Sensoren in einem Fahrzeug auf die zu erwartenden Zählwerte der anderen Sensoren geschlossen werden. Werden bei einer derartigen Sensor-Analyse signifikante Abweichungen oder Änderungen festgestellt, so können Diagnosemeldungen generiert werden, so dass die beteiligten Sensoren auf korrekte Funktion überprüft werden können (z.B. durch Abgleich mit manuell gezählten Fahrgästen während einer Prüffahrt, die ohnehin durchgeführt wird oder aber eigens zur Überprüfung des Sensors angesetzt wird). Sollten die Sensoren korrekt funktionieren, so muss von einer Änderung des Verteilungsverhaltens ausgegangen werden, die in der Statistik angepasst werden muss.

Auf die gleiche Weise können so nicht nur beeinträchtigte Sensoren erkannt werden, sondern auch Sensoren komplett eingespart werden.

Durch den Einsatz der vorstehend skizzierten Algorithmenbasierten Berechnung der Verteilungsstatistiken, das In-Beziehung-Setzen der Verteilungsstatistiken mit den Messdaten und die Berücksichtigung des durch das In-Beziehung-Setzen ermittelten Korrelationsgrads in den Verteilungsstatistiken ergeben sich folgende Vorteile der Erfindung unter der Voraussetzung, dass zumindest für den Teil der betrachteten Fahrzeugflotte die Fahrzeuge mit hinreichend vielen Sensoren ausgestattet wurden:
A. Wenn Sensoren Werte liefern, die signifikant von den gemäß den Statistiken erwarteten Werten abweichen, so werden Diagnosemeldungen erzeugt und an andere Systeme weitergeleitet. Der Sensor kann infolgedessen näher untersucht und bei Bedarf oder sofern erforderlich getauscht werden.
B. Wenn in einem Fahrzeug nur ein Teil der maximalen Sensorbestückung vorgenommen wurde, so kann auf die Fahrgastzahlen der bewusst nicht bestückten Sensoren geschlossen werden. So kann z.B. auf Basis der Statistiken der Wert für das Einsteigen/Aussteigen an Türen ohne Zählsensoren auf Basis des Wertes für das Einsteigen/Aussteigen an Türen mit Zählsensoren geschätzt werden.

Dieses Verfahren kann auch angewendet werden, wenn ein Sensor gar nicht mehr funktioniert, so dass falsche Messdaten ersetzt werden können.
C. Schließlich kann auf Basis der Werte für das Einsteigen/Aussteigen an Türen auf die Verteilung der Fahrgäste im Fahrzeug geschlossen werden.

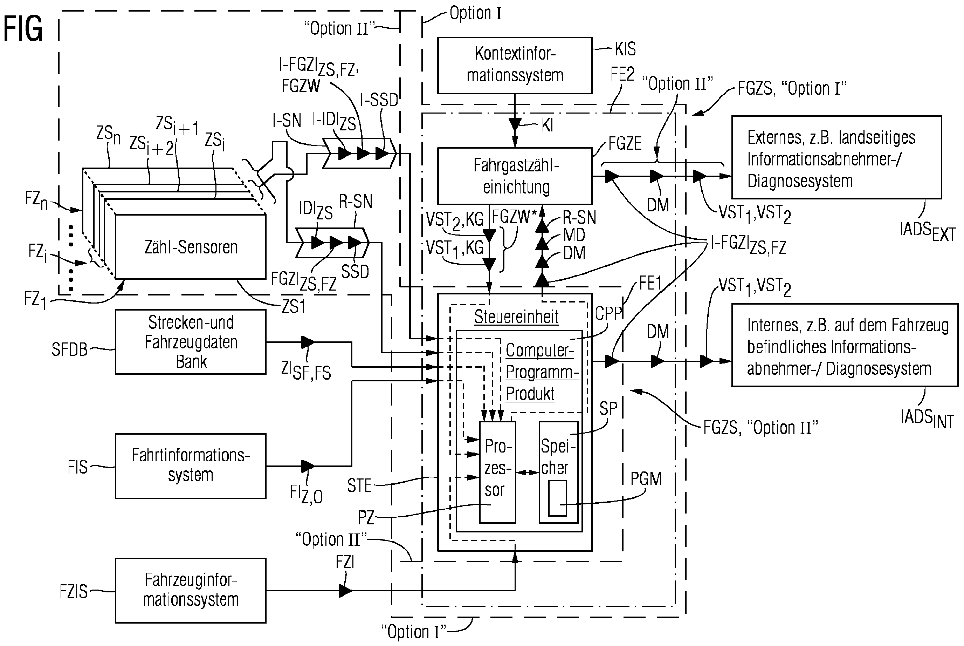

Weitere Vorteile der Erfindung ergeben sich aus der nachfolgenden Beschreibung eines Ausführungsbeispieles der Erfindung anhand der einzigen FIGUR.

Diese zeigt ein Fahrgastzählsystem zur Analyse von Zählsensoren in einem Fahrzeug zur Fahrgastbeförderung, insbesondere im Schienen- und Straßenverkehr.

FIGUR zeigt ein Fahrgastzählsystem FGZS zur Analyse von Zählsensoren in einem Fahrzeug zur Fahrgastbeförderung, insbesondere im Schienen- und Straßenverkehr. Dieses Fahrgastzählsystem FGZS enthält entweder gemäß "Option I" in der FIGUR Zählsensoren ZS₁...ZSᵢ...ZSₙ auf Fahrzeugen FZ₁...FZᵢ...FZₙ zur fahrstreckenbezogenen Fahrgastbeförderung, insbesondere im Schienen- und Straßenverkehr, eine Steuereinheit STE, die mit den Zählsensoren ZS₁...ZSᵢ...ZSₙ auf Fahrzeugen FZ₁...FZᵢ...FZₙ verbunden ist, und eine Fahrgastzähleinrichtung FGZE, die mit der Steuereinheit STE verbunden ist, oder gemäß "Option II" in der FIGUR Zählsensoren ZS₁...ZSᵢ...ZSₙ auf Fahrzeugen FZ₁...FZᵢ...FZₙ zur fahrstreckenbezogenen Fahrgastbeförderung, insbesondere im Schienen- und Straßenverkehr, und eine Steuereinheit STE, die mit den Zählsensoren ZS₁...ZSᵢ...ZSₙ auf Fahrzeugen FZ₁...FZᵢ...FZₙ verbunden ist.

Bei der "Option II", wo die Fahrgastzähleinrichtung FGZE nicht Bestandteil des Fahrgastzählsystems FGZS ist, ist diese eine als Cloud ausgebildete, außerhalb des Fahrzeugs zur Fahrgastbeförderung befindliche, landseitige Einrichtung, in der Messdaten gespeichert und korreliert werden. Was diese Messdaten sind und woher sie stammen wird im Nachfolgenden bei der Beschreibung der FIGUR erläutert. Aus diesen Messdaten werden Statistiken ermittelt, wie sich die Zustiege/Ausstiege von Fahrgästen über die Türen eines Fahrzeugs verteilen und wie sich Fahrgäste im Fahrzeug verteilen. Diese beiden Verteilungsstatistiken werden durch die FGZE-Cloud mit den weiteren vorgenannten Messdaten in Beziehung gesetzt und der Grad der Korrelation festgestellt. Neben diese Kernfunktionen kann die FGZE-Cloud die Verteilungsstatistiken und Daten aus der Sensor-Analyse(Fahrgastzahlen und Diagnosemeldung) auch an Fahrzeuge weiterreichen, damit die vorgenannten Aufgaben auf diesen Fahrzeugen ausgeführt werden.

Die Steuereinheit STE enthält ein Computer-Programm-Produkt CPP zur Sensor-Analyse mit einem nicht-flüchtigen, lesbaren Speicher SP, in dem prozessorlesbare Steuerprogrammbefehle eines die Sensor-Analyse durchführenden Programm-Moduls PGM gespeichert sind, und einem mit dem Speicher SP verbundenen Prozessor PZ, der die Steuerprogrammbefehle des Programm-Moduls PGM zur Sensor-Analyse ausführt, und bildet dabei unabhängig von der "Option I" oder der "Option II" mit den Zählsensoren ZS₁...ZSᵢ...ZSₙ eine gemeinsame erste Funktionseinheit FE1.

Diese erste Funktionseinheit FE1 ist nun derart ausgebildet, dass Referenz-Sensornachrichten R-SN mit darin enthaltenen sensorspezifischen Identifikationsinformationen IDI_{ZS}, sensor- und fahrzeugspezifischen Fahrgastzahlinformationen FGZI_{ZS,FZ} und Sensorstatusdaten SSD der Zählsensoren ZS₁...ZSᵢ...ZSₙ gesammelt, z.B. durch entsprechendes Laden der Referenz-Sensornachrichten R-SN in den Prozessor PZ, und aggregiert werden.

Mit anderen Worten, die Zählsensoren ZS₁...ZSᵢ...ZSₙ liefern Fahrgastzahlen, je nach Sensortyp jeweils eine Anzahl von Einstiege, Ausstiege, Wagenwechsel oder eine entsprechende Anzahl pro Wagen. Geliefert werden auch sensorspezifische Gerätemeldungen. Bei jeder Nachricht des Sensors muss eine Identifikation des Sensors (z.B. projektierte IP-Adresse, Seriennummer oder ähnliches auch als Sensor-ID bezeichnet) enthalten sein. Über die Sensor-ID kann auf die Montageposition eines Sensors im Fahrzeug geschlossen werden.

Ebenso wenig abhängig von der "Option I" oder der "Option II" bildet die Steuereinheit STE weiterhin mit der Fahrgastzähleinrichtung FGZE eine gemeinsame zweite Funktionseinheit FE2.

Diese zweite Funktionseinheit FE2 ist derart ausgebildet, dass
- sensorfahrzeug- und fahrstreckenspezifische Zusatzinformationen ZI_{SF,FS}, die von einer Strecken- und Fahrzeugdatenbank SFDB geliefert werden, in der Steuereinheit STE gesammelt, z.B. durch entsprechendes Laden der Zusatzinformationen ZI_{SF,FS} in den Prozessor PZ, und aggregiert werden, wobei zu diesem Zweck die Steuereinheit STE inklusive des Prozessors PZ mit der Strecken- und Fahrzeugdatenbank SFDB verbindbar ist und die sensorfahrzeug- und fahrstreckenspezifischen Zusatzinformationen ZI_{SF,FS} vorzugsweise Informationen über Haltestellen, Ortstrukturinformationen der Haltestellen und Informationen zur Montageposition der Zählsensoren ZS sind,
- zeit- und ortsspezifische Fahrtinformationen FI_{Z,O}, die von einem Fahrtinformationssystem FIS geliefert werden, in der Steuereinheit STE gesammelt, z.B. durch entsprechendes Laden der Fahrtinformationen FI_{Z,O} in den Prozessor PZ, und aggregiert werden, wobei zu diesem Zweck die Steuereinheit STE inklusive des Prozessors PZ mit dem Fahrtinformationssystem FIS verbindbar ist und die zeit- und ortsspezifische Fahrtinformationen FI_{Z,O} vorzugsweise angeben, an welcher Haltestelle, z.B. Bahnsteig, sich ein Fahrzeug FZᵢ aktuell befindet, an welchem Ort, z.B. Gleis, das Fahrzeug FZᵢ steht, wie das Fahrzeug FZᵢ relativ zur Haltestelle steht, wie die aktuelle Uhrzeit ist und wie viele Minuten Verspätung das Fahrzeug FZᵢ diesbezüglich hat,
- Fahrzeuginformationen FZI, die von einem Fahrzeuginformationssystem FZIS geliefert werden, in der Steuereinheit STE gesammelt, z.B. durch entsprechendes Laden der Fahrzeuginformationen FZI in den Prozessor PZ, und aggregiert werden, wobei zu diesem Zweck die Steuereinheit STE inklusive des Prozessors PZ mit dem Fahrtinformationssystem FIS verbindbar ist und die Fahrzeuginformationen FZI vorzugsweise angeben, ob Störungen, z.B. Türstörungen, vorliegen, die den Fahrgastfluss beeinträchtigen, und ob das Fahrzeug FZᵢ ein Fahrzeug mit Mehrfachtraktion bildet, also ein Zug ist, und wie die einzelnen Wagen in diesem Fall gereiht sind,
- Kontextinformationen KI, die von einem Kontextinformationssystem KIS geliefert werden, in der Steuereinheit STE gesammelt, z.B. durch entsprechendes Laden der Kontextinformationen KI in den Prozessor PZ, und aggregiert werden, wobei zu diesem Zweck die Steuereinheit STE inklusive des Prozessors PZ mit dem Fahrtinformationssystem FIS verbindbar ist und die Kontextinformationen KI Informationen sind, die für die Fahrgastzahlinformationen FGZI_{ZS,FZ} relevant sind, so z.B. Termine für Großveranstaltungen oder Ferientermine

Die Strecken- und Fahrzeugdatenbank SFDB zur Speicherung der sensorfahrzeug- und fahrstreckenspezifische Zusatzinformationen ZI_{SF,FS}, das Fahrtinformationssystem FIS mit den zeit- und ortsspezifische Fahrtinformationen FI_{Z,O}, das Fahrzeuginformationssystem FZIS) mit den Fahrzeuginformationen FZI und/oder das Kontextinformationssystem KIS mit den Kontextinformationen KI können entweder in dem Fahrgastzählsystem FGZS enthalten oder dem Fahrgastzählsystem FGZS als Systemkomponenten zugeordnet sein, die sich auf dem Fahrzeug FZᵢ befinden oder aber außerhalb des Fahrzeugs FZᵢ angeordnet sind.

Darüber hinaus ist zweite Funktionseinheit FE2 derart ausgebildet, dass
- die Steuereinheit STE aus den vorstehend gesammelten und aggregierten Informationen ZI_{SF,FS}, FI_{Z,O}. FZI, KI Messdaten MD generiert und diese zusammen mit den Referenz-Sensornachrichten R-SN an die Fahrgastzähleinrichtung FGZE übermittelt,
- die Fahrgastzähleinrichtung FGZE aus den Referenz-Sensornachrichten R-SN mit Hilfe üblicher Algorithmen zur Berechnung von Verteilungsstatistiken eine erste Verteilungsstatistik VST₁, die angibt, wie sich das Ein-/Aussteigen von Fahrgästen an Türen eines Fahrzeugs FZᵢ der Fahrzeuge FZ₁...FZᵢ...FZₙ verteilt, und eine zweite Verteilungsstatistik VST₂, die angibt, wie sich die Fahrgäste in dem Fahrzeug FZᵢ verteilen, ermittelt,
- die Fahrgastzähleinrichtung FGZE die beiden Verteilungsstatistiken VST₁, VST₂ mit den Messdaten MD in Beziehung setzt und einen Korrelationsgrad KG ermittelt, der in den beiden Verteilungsstatistiken VST₁, VST₂ seine Berücksichtigung findet, und die Verteilungsstatistiken VST₁, VST₂ an die Steuereinheit STE übermittelt.

Ferner ist zweite Funktionseinheit FE2 derart ausgebildet, dass die Steuereinheit STE eine von mindestens einem Zählsensor ZSᵢ, Z_{Si+1}, ZSᵢ₊₂,... der Zählsensoren ZS₁...ZSᵢ...ZSₙ auf dem Fahrzeug FZᵢ zur fahrstreckenbezogenen Fahrgastbeförderung jeweils erhaltene IST-Sensornachricht I-SN mit einer darin enthaltenen sensorspezifischen IST-Identifikationsinformation I-IDI_{ZS}, einer sensor- und fahrzeugspezifischen IST-Fahrgastzahlinformation I-FGZI_{ZS,FZ} und einem IST-Sensorstatusdatum I-SSD in Bezug auf die beiden Verteilungsstatistiken VST₁, VST₂ jeweils derart analysiert, dass
- wenn ein durch die jeweilige IST-Fahrgastzahlinformation I-FGZI_{ZS,FZ} gegebener Fahrgastzahlenwert FGZW von einem weiteren auf der Basis der beiden Verteilungsstatistiken VST₁, VST₂ ermittelten Fahrgastzahlenwert FGZW* abweicht, eine Diagnosemeldung DM generiert wird, und/oder
- wenn die Anzahl der Zählsensoren ZSᵢ, Z_{Si+1}, ZSᵢ₊₂,... der Zählsensoren ZS₁...ZSᵢ...ZSₙ auf dem Fahrzeug FZᵢ kleiner ist als eine Maximalanzahl von Zählsensoren auf dem Fahrzeug FZᵢ, auf mögliche Fahrgastzahlen der deshalb nicht vorhandenen Zähl-Sensoren auf dem Fahrzeug FZᵢ geschlossen wird, indem auf Basis der beiden Verteilungsstatistiken VST₁, VST₂ ein Wert für das Ein-/Aussteigen an Türen in dem Fahrzeug FZᵢ ohne Zählsensoren auf Basis der Fahrgastzahlenwerte FGZW für das Ein-/Aussteigen an Türen in dem Fahrzeug FZᵢ mit den Zählsensoren ZSᵢ, Z_{Si+1}, ZSᵢ₊₂,... geschätzt wird, und/oder
- auf Basis der Fahrgastzahlenwerte FGZW für das Ein-/Aussteigen an Türen in dem Fahrzeug FZᵢ mit den Zählsensoren ZSᵢ, Z_{Si+1}, ZSᵢ₊₂,... auf die Verteilung von Fahrgästen in dem Fahrzeug FZᵢ geschlossen wird.

In einer Abwandlung der zweiten Funktionseinheit FE2 könnte die Steuereinheit STE mit dem Computer-Programm-Produkt CPP zur Sensor-Analyse Verteilungsstatistiken auch von einem fremden Fahrgastzählsystem beziehen.

In einer weiteren Abwandlung der zweiten Funktionseinheit FE2 könnte die Steuereinheit STE mit dem Computer-Programm-Produkt CPP zur Sensor-Analyse auf rein lokale, auf das Fahrzeug FZᵢ bezogene Verteilungsstatistiken die Diagnosemeldung DM generieren (erster Spiegelstrich der drei vorstehenden Spiegelstriche). Eine Umsetzung der technischen Merkmale in den anderen beiden Spiegelstrichen der drei vorstehenden Spiegelstriche ist mit rein lokalen, auf das Fahrzeug FZᵢ bezogenen Verteilungsstatistiken nicht sinnvoll möglich.

Die zweite Funktionseinheit FE2 ist weiterhin derart ausgebildet, dass
- die Steuereinheit STE die Verteilungsstatistiken VST₁, VST₂, die IST-Fahrgastzahlinformation I-FGZI_{ZS,FZ} und die Diagnosemeldung DM an ein auf dem Fahrzeug FZᵢ befindliches internes Informationsabnehmer/Diagnosesystem IADS_{INT} übermittelt,
- wenn sich die Fahrgastzähleinrichtung FGZE, ausgebildet als FGZE-Cloud, also ausgebildet als eine "Cloud zum automatischen Zählen von Fahrgästen", außerhalb des Fahrgastzählsystems FGZS befindet ("Option II"), die Steuereinheit STE die Diagnosemeldung DM und die IST-Fahrgastzahlinformation I-FGZI_{ZS,FZ} an die als "Cloud zum automatischen Zählen von Fahrgästen" ausgebildete Fahrgastzähleinrichtung FGZE übermittelt und diese die Verteilungsstatistiken VST₁, VST₂, die IST-Fahrgastzahlinformation I-FGZI_{ZS,FZ} sowie die Diagnosemeldung DM an ein dem Fahrzeug FZᵢ zugeordnetes, außerhalb des Fahrzeugs FZᵢ befindliches externes Informationsabnehmer/Diagnosesystem IADS_{EXT} übermittelt.

Durch das interne Informationsabnehmer/Diagnosesystem IADS_{INT} ist es möglich, dass mit den übermittelten Verteilungsstatistiken VST₁, VST₂ und der übermittelten IST-Fahrgastzahlinformation I-FGZI_{ZS,FZ} Fahrgastzahlen und Fahrgastverteilung einem Zugpersonal angezeigt werden können und dass mit der übermittelten Diagnosemeldung DM eine sensorspezifische Gerätestörung signalisiert werden kann, die darüber hinaus zu Wartungszwecken in dem Informationsabnehmer/Diagnosesystem IADS_{INT} gespeichert werden kann.

Durch das externe Informationsabnehmer/Diagnosesystem IADS_{EXT} ist es möglich, dass mit den übermittelten Verteilungsstatistiken VST₁, VST₂ und der übermittelten IST-Fahrgastzahlinformation I-FGZI_{ZS,FZ} Fahrgastzahlen und Fahrgastverteilung in diversen Systemen des Bahn-Betreibers angezeigt oder zur Abrechnung gegenüber Ländern genutzt werden können und dass mit der übermittelten Diagnosemeldung DM wieder eine sensorspezifische Gerätestörung signalisiert werden kann, die darüber hinaus wieder zu Wartungszwecken in dem Informationsabnehmer/Diagnosesystem IADS_{EXT} gespeichert werden kann.

## Patentansprüche

1. Sensor-Analyse-Verfahren, bei dem
**a**) von Zählsensoren (ZS₁...ZSᵢ...ZSₙ) auf Fahrzeugen (FZ₁...FZᵢ...FZₙ) zur fahrstreckenbezogenen Fahrgastbeförderung, insbesondere im Schienen- und Straßenverkehr, Referenz-Sensornachrichten (R-SN) mit darin enthaltenen sensorspezifischen Identifikationsinformationen (IDI_{ZS}), sensor- und fahrzeugspezifischen Fahrgastzahlinformationen (FGZI_{ZS,FZ}) und Sensorstatusdaten (SSD) gesammelt und aggregiert werden,
**dadurch gekennzeichnet, dass**
**b**) sensorfahrzeug- und fahrstreckenspezifische Zusatzinformationen (ZI_{SF,FS}) gesammelt und aggregiert werden,
**c**) zeit- und ortsspezifische Fahrtinformationen (FI_{Z,O}) gesammelt und aggregiert werden,
**d**) Fahrzeuginformationen (FZI) gesammelt und aggregiert werden,
**e**) Kontextinformationen (KI) gesammelt und aggregiert werden,
**f**) aus den gemäß der Merkmale **b**) bis **e**) gesammelten und aggregierten Informationen (ZI_{SF,FS}, FI_{Z,O}, FZI, KI) Messdaten (MD) generiert werden,
**g**) aus den Referenz-Sensornachrichten (R-SN) mit Hilfe üblicher Algorithmen zur Berechnung von Verteilungsstatistiken eine erste Verteilungsstatistik (VST₁), die angibt, wie sich das Ein-/Aussteigen von Fahrgästen an Türen eines Fahrzeugs (FZᵢ) der Fahrzeuge (FZ₁...FZᵢ...FZₙ) verteilt, und eine zweite Verteilungsstatistik (VST₂), die angibt, wie sich die Fahrgäste in dem Fahrzeug (FZᵢ) verteilen, ermittelt werden,
**h**) die beiden Verteilungsstatistiken (VST₁, VST₂) mit den Messdaten (MD) in Beziehung gesetzt werden und ein Korrelationsgrad (KG) ermittelt wird, der in den beiden Verteilungsstatistiken (VST₁, VST₂) seine Berücksichtigung findet,
**i**) eine von mindestens einem Zählsensor (ZSᵢ, Z_{Si+1}, ZSᵢ₊₂,...) der Zählsensoren (ZS₁...ZSᵢ...ZSₙ) auf dem Fahrzeug (FZᵢ) zur fahrstreckenbezogenen Fahrgastbeförderung jeweils erhaltene IST-Sensornachricht (I-SN) mit einer darin enthaltenen sensorspezifischen IST-Identifikationsinformation (I-IDI_{ZS}), einer sensor- und fahrzeugspezifischen IST-Fahrgastzahlinformation (I-FGZI_{ZS,FZ}) und einem IST-Sensorstatusdatum (I-SSD) in Bezug auf die beiden Verteilungsstatistiken (VST₁, VST₂) jeweils derart analysiert wird, dass
**i1**) wenn ein durch die jeweilige IST-Fahrgastzahlinformation (I-FGZI_{ZS,FZ}) gegebener Fahrgastzahlenwert (FGZW) von einem weiteren auf der Basis der beiden Verteilungsstatistiken (VST₁, VST₂) ermittelten Fahrgastzahlenwert (FGZW*) abweicht, eine Diagnosemeldung (DM) generiert wird, und/oder
**i2**) wenn die Anzahl der Zählsensoren (ZSᵢ, Z_{Si+1}, ZSᵢ₊₂,...) der Zählsensoren (ZS₁...ZSᵢ...ZSₙ) auf dem Fahrzeug (FZᵢ) kleiner ist als eine Maximalanzahl von Zählsensoren auf dem Fahrzeug (FZᵢ), auf mögliche Fahrgastzahlen der deshalb nicht vorhandenen Zählsensoren auf dem Fahrzeug (FZᵢ) geschlossen wird, indem auf Basis der beiden Verteilungsstatistiken (VST₁, VST₂) ein Wert für das Ein-/Aussteigen an Türen in dem Fahrzeug (FZᵢ) ohne Zählsensoren auf Basis der Fahrgastzahlenwerte (FGZW) für das Ein-/Aussteigen an Türen in dem Fahrzeug (FZᵢ) mit den Zählsensoren (ZSᵢ, Z_{Si+1}, ZSᵢ₊₂,...) geschätzt wird, und/oder
**i3**) auf Basis der Fahrgastzahlenwerte (FGZW) für das Ein-/Aussteigen an Türen in dem Fahrzeug (FZᵢ) mit den Zählsensoren (ZSᵢ, Z_{Si+1}, ZSᵢ₊₂,...) auf die Verteilung von Fahrgästen in dem Fahrzeug (FZᵢ) geschlossen wird.

2. Verfahren nach Anspruch 1, **dadurch gekennzeichnet, dass** die sensorfahrzeug- und fahrstreckenspezifischen Zusatzinformationen (ZI_{SF,FS}) Informationen über Haltestellen der Fahrstrecken, Ortstrukturinformationen der Haltestellen und Informationen zur Montageposition der Zählsensoren (ZS) sind.

3. Verfahren nach Anspruch 1 oder 2, **dadurch gekennzeichnet, dass**
die zeit- und ortsspezifische Fahrtinformationen (FI_{Z,O}) angeben, an welcher Haltestelle, z.B. Bahnsteig, sich ein Fahrzeug (FZᵢ) aktuell befindet, an welchem Ort, z.B. Gleis, das Fahrzeug (FZᵢ) steht, wie das Fahrzeug (FZᵢ) relativ zur Haltestelle steht, wie die aktuelle Uhrzeit ist und wie viele Minuten Verspätung das Fahrzeug (FZᵢ) diesbezüglich hat.

4. Verfahren nach einem der Ansprüche 1 bis 3, **dadurch gekennzeichnet, dass**
die Fahrzeuginformationen (FZI) angeben, ob Störungen, z.B. Türstörungen, vorliegen, die den Fahrgastfluss beeinträchtigen, und ob das Fahrzeug (FZᵢ) ein Fahrzeug mit Mehrfachtraktion bildet, also ein Zug ist, und wie die einzelnen Wagen in diesem Fall gereiht sind.

5. Verfahren nach einem der Ansprüche 1 bis 4, **dadurch gekennzeichnet, dass**
die Kontextinformationen (KI) Informationen sind, die für die Fahrgastzahlinformationen (FGZI_{ZS,FZ}) relevant sind, so z.B. Termine für Großveranstaltungen oder Ferientermine.

6. Computer-Programm-Produkt (CPP) zur Sensor-Analyse mit einem nicht-flüchtigen, lesbaren Speicher (SP), in dem prozessorlesbare Steuerprogrammbefehle eines die Sensor-Analyse durchführenden Programm-Moduls (PGM) gespeichert sind, und einem mit dem Speicher (SP) verbundenen Prozessor (PZ), der die Steuerprogrammbefehle des Programm-Moduls (PGM) zur Sensor-Analyse ausführt und dabei
**a**) Referenz-Sensornachrichten (R-SN) mit darin enthaltenen sensorspezifischen Identifikationsinformationen (IDI_{ZS}), sensor- und fahrzeugspezifischen Fahrgastzahlinformationen (FGZI_{ZS,FZ}) und Sensorstatusdaten (SSD) von Zählsensoren (ZS₁...ZSᵢ...ZSₙ) auf Fahrzeugen (FZ₁...FZᵢ...FZₙ) zur fahrstreckenbezogenen Fahrgastbeförderung, insbesondere im Schienen- und Straßenverkehr, sammelt, insbesondere durch jeweiliges Laden in den Prozessor (PZ), und aggregiert,
**dadurch gekennzeichnet, dass**
der Prozessor (PZ) und das Programm-Modul (PGM) zum Durchführen der Sensor-Analyse derart ausgebildet sind, dass
b) sensorfahrzeug- und fahrstreckenspezifische Zusatzinformationen (ZI_{SF,FS}) gesammelt, insbesondere durch jeweiliges Laden in den Prozessor (PZ), und aggregiert werden,
**c**) zeit- und ortsspezifische Fahrtinformationen (FI_{Z,O}) gesammelt, insbesondere durch jeweiliges Laden in den Prozessor (PZ), und aggregiert werden,
**d**) Fahrzeuginformationen (FZI) gesammelt, insbesondere durch jeweiliges Laden in den Prozessor (PZ), und aggregiert werden,
**e**) Kontextinformationen (KI) gesammelt, insbesondere durch jeweiliges Laden in den Prozessor (PZ), und aggregiert werden,
**f**) aus den gemäß der Merkmale **b**) bis **e**) gesammelten und aggregierten Informationen (ZI_{SF,FS}, FI_{Z,O}. FZI, KI) Messdaten (MD) generiert werden,
**g**) aus den Referenz-Sensornachrichten (R-SN) mit Hilfe üblicher Algorithmen zur Berechnung von Verteilungsstatistiken eine erste Verteilungsstatistik (VST₁), die angibt, wie sich das Ein-/Aussteigen von Fahrgästen an Türen eines Fahrzeugs (FZᵢ) der Fahrzeuge (FZ₁...FZᵢ...FZₙ) verteilt, und eine zweite Verteilungsstatistik (VST₂), die angibt, wie sich die Fahrgäste in dem Fahrzeug (FZᵢ) verteilen, ermittelt werden,
**h**) die beiden Verteilungsstatistiken (VST₁, VST₂) mit den Messdaten (MD) in Beziehung gesetzt werden und ein Korrelationsgrad (KG) ermittelt wird, der in den beiden Verteilungsstatistiken (VST₁, VST₂) seine Berücksichtigung findet,
**i**) eine von mindestens einem Zählsensor (ZSᵢ, Z_{Si+1}, ZSᵢ₊₂,...) der Zählsensoren (ZS₁...ZSᵢ...ZSₙ) auf dem Fahrzeug (FZᵢ) zur fahrstreckenbezogenen Fahrgastbeförderung jeweils erhaltene IST-Sensornachricht (I-SN) mit einer darin enthaltenen sensorspezifischen IST-Identifikationsinformation (I-IDI_{ZS}), einer sensor- und fahrzeugspezifischen IST-Fahrgastzahlinformation (I-FGZI_{ZS,FZ}) und einem IST-Sensorstatusdatum (I-SSD) in Bezug auf die beiden Verteilungsstatistiken (VST₁, VST₂) jeweils derart analysiert wird, dass
**i1**) wenn ein durch die jeweilige IST-Fahrgastzahlinformation (I-FGZI_{ZS,FZ}) gegebener Fahrgastzahlenwert (FGZW) von einem weiteren auf der Basis der beiden Verteilungsstatistiken (VST₁, VST₂) ermittelten Fahrgastzahlenwert (FGZW*) abweicht, eine Diagnosemeldung (DM) generiert wird, und/oder
i2) wenn die Anzahl der Zählsensoren (ZSᵢ, Z_{Si+1}, ZSᵢ₊₂,...) der Zählsensoren (ZS₁...ZSᵢ...ZSₙ) auf dem Fahrzeug (FZᵢ) kleiner ist als eine Maximalanzahl von Zähl-Sensoren auf dem Fahrzeug (FZᵢ), auf mögliche Fahrgastzahlen der deshalb nicht vorhandenen Zählsensoren auf dem Fahrzeug (FZᵢ) geschlossen werden, indem auf Basis der beiden Verteilungsstatistiken (VST₁, VST₂) ein Wert für das Ein-/Aussteigen an Türen in dem Fahrzeug (FZᵢ) ohne Zählsensoren auf Basis der Fahrgastzahlenwerte (FGZW) für das Ein-/Aussteigen an Türen in dem Fahrzeug (FZᵢ) mit den Zählsensoren (ZSᵢ, Z_{Si+1}, ZSᵢ₊₂,...) geschätzt wird, und/oder
i3) auf Basis der Fahrgastzahlenwerte (FGZW) für das Ein-/Aussteigen an Türen in dem Fahrzeug (FZᵢ) mit den Zählsensoren (ZSᵢ, Z_{Si+1}, ZSᵢ₊₂,...) auf die Verteilung von Fahrgästen in dem Fahrzeug (FZᵢ) geschlossen wird.

7. Computer-Programm-Produkt (CPP) nach Anspruch 6, **dadurch gekennzeichnet, dass**
die sensorfahrzeug- und fahrstreckenspezifischen Zusatzinformationen (ZI_{SF,FS}) Informationen über Haltestellen der Fahrstrecken, Ortstrukturinformationen der Haltestellen und Informationen zur Montageposition der Zählsensoren (ZS) sind.

8. Computer-Programm-Produkt (CPP) nach Anspruch 6 oder 7, **dadurch gekennzeichnet, dass**
die zeit- und ortsspezifische Fahrtinformationen (FI_{Z,O}) angeben, an welcher Haltestelle, z.B. Bahnsteig, sich ein Fahrzeug (FZᵢ) aktuell befindet, an welchem Ort, z.B. Gleis, das Fahrzeug (FZᵢ) steht, wie das Fahrzeug (FZᵢ) relativ zur Haltestelle steht, wie die aktuelle Uhrzeit ist und wie viele Minuten Verspätung das Fahrzeug (FZᵢ) diesbezüglich hat.

9. Computer-Programm-Produkt (CPP) nach einem der Ansprüche 6 bis 8, **dadurch gekennzeichnet, dass**
die Fahrzeuginformationen (FZI) angeben, ob Störungen, z.B. Türstörungen, vorliegen, die den Fahrgastfluss beeinträchtigen, und ob das Fahrzeug (FZᵢ) ein Fahrzeug mit Mehrfachtraktion bildet, also ein Zug ist, und wie die einzelnen Wagen in diesem Fall gereiht sind.

10. Computer-Programm-Produkt (CPP) nach einem der Ansprüche 6 bis 9, **dadurch gekennzeichnet, dass**
die Kontextinformationen (KI) Informationen sind, die für die Fahrgastzahlinformationen (FGZI_{ZS,FZ}) relevant sind, so z.B. Termine für Großveranstaltungen oder Ferientermine.

11. Fahrgastzählsystem (FGZS) mit
Zählsensoren (ZS₁...ZSᵢ...ZSₙ) auf Fahrzeugen (FZ₁...FZᵢ...FZₙ) zur fahrstreckenbezogenen Fahrgastbeförderung, insbesondere im Schienen- und Straßenverkehr, und einer Steuereinheit (STE), die ein Computer-Programm-Produkt (CPP) zur Sensor-Analyse mit einem nicht-flüchtigen, lesbaren Speicher (SP), in dem prozessorlesbare Steuerprogrammbefehle eines die Sensor-Analyse durchführenden Programm-Moduls (PGM) gespeichert sind, und einem mit dem Speicher (SP) verbundenen Prozessor (PZ), der die Steuerprogrammbefehle des Programm-Moduls (PGM) zur Sensor-Analyse ausführt, enthält, mit den Zählsensoren (ZS₁...ZSᵢ...ZSₙ) verbunden ist und mit diesen eine gemeinsame erste Funktionseinheit (FE1) bildet, wobei die erste Funktionseinheit (FE1) derart ausgebildet ist, dass
**a**) Referenz-Sensornachrichten (R-SN) mit darin enthaltenen sensorspezifischen Identifikationsinformationen (IDI_{ZS}), sensor- und fahrzeugspezifischen Fahrgastzahlinformationen (FGZI_{ZS,FZ}) und Sensorstatusdaten (SSD) der Zählsensoren (ZS₁...ZSᵢ...ZSₙ) gesammelt, insbesondere durch jeweiliges Laden in den Prozessor (PZ), und aggregiert werden,
**dadurch gekennzeichnet, dass**
die Steuereinheit (STE) mit einer Fahrgastzähleinrichtung (FGZE) verbunden ist und mit dieser eine gemeinsame zweite Funktionseinheit (FE2) bildet, wobei die zweite Funktionseinheit (FE2) derart ausgebildet ist, dass
**b**) sensorfahrzeug- und fahrstreckenspezifische Zusatzinformationen (ZI_{SF,FS}) von einer Strecken- und Fahrzeugdatenbank (SFDB) in der Steuereinheit (STE) gesammelt, insbesondere durch jeweiliges Laden in den Prozessor (PZ), und aggregiert werden,
**c**) zeit- und ortsspezifische Fahrtinformationen (FI_{Z,O}) von einem Fahrtinformationssystem (FIS) in der Steuereinheit (STE) gesammelt, insbesondere durch jeweiliges Laden in den Prozessor (PZ), und aggregiert werden,
**d**) Fahrzeuginformationen (FZI) von einem Fahrzeuginformationssystem (FZIS) in der Steuereinheit (STE) gesammelt, insbesondere durch jeweiliges Laden in den Prozessor (PZ), und aggregiert werden,
**e**) Kontextinformationen (KI) von einem Kontextinformationssystem (KIS) in der Steuereinheit (STE) gesammelt, insbesondere durch jeweiliges Laden in den Prozessor (PZ), und aggregiert werden,
**f**) die Steuereinheit (STE) aus den gemäß der Merkmale **b**) bis **e)** gesammelten und aggregierten Informationen (ZI_{SF,FS}, FI_{Z,O}. FZI, KI) Messdaten (MD) generiert und diese zusammen mit den Referenz-Sensornachrichten (R-SN) an die Fahrgastzähleinrichtung (FGZE) übermittelt,
**g**) die Fahrgastzähleinrichtung (FGZE) aus den Referenz-Sensornachrichten (R-SN) mit Hilfe üblicher Algorithmen zur Berechnung von Verteilungsstatistiken eine erste Verteilungsstatistik (VST₁), die angibt, wie sich das Ein-/Aussteigen von Fahrgästen an Türen eines Fahrzeugs (FZᵢ) der Fahrzeuge (FZ₁...FZᵢ...FZₙ) verteilt, und eine zweite Verteilungsstatistik (VST₂), die angibt, wie sich die Fahrgäste in dem Fahrzeug (FZᵢ) verteilen, ermittelt,
**h**) die Fahrgastzähleinrichtung (FGZE) die beiden Verteilungsstatistiken (VST₁, VST₂) mit den Messdaten (MD) in Beziehung setzt und einen Korrelationsgrad (KG) ermittelt, der in den beiden Verteilungsstatistiken (VST₁, VST₂) seine Berücksichtigung findet, und die Verteilungsstatistiken (VST₁, VST₂) an die Steuereinheit (STE) übermittelt,
**i**) die Steuereinheit (STE) eine von mindestens einem Zählsensor (ZSᵢ, Z_{Si+1}, ZSᵢ₊₂,...) der Zählsensoren (ZS₁...ZSᵢ...ZSₙ) auf dem Fahrzeug (FZᵢ) zur fahrstreckenbezogenen Fahrgastbeförderung jeweils erhaltene IST-Sensornachricht (I-SN) mit einer darin enthaltenen sensorspezifischen IST-Identifikationsinformation (I-IDI_{ZS}), einer sensor- und fahrzeugspezifischen IST-Fahrgastzahlinformation (I-FGZI_{ZS,FZ}) und einem IST-Sensorstatusdatum (I-SSD) in Bezug auf die beiden Verteilungsstatistiken (VST₁, VST₂) jeweils derart analysiert, dass
**i1**) wenn ein durch die jeweilige IST-Fahrgastzahlinformation (I-FGZI_{ZS,FZ}) gegebener Fahrgastzahlenwert (FGZW) von einem weiteren auf der Basis der beiden Verteilungsstatistiken (VST₁, VST₂) ermittelten Fahrgastzahlenwert (FGZW*) abweicht, eine Diagnosemeldung (DM) generiert wird, und/oder
**i2**) wenn die Anzahl der Zählsensoren (ZSᵢ, Z_{Si+1}, ZSᵢ₊₂,...) der Zählsensoren (ZS₁...ZSᵢ...ZSₙ) auf dem Fahrzeug (FZᵢ) kleiner ist als eine Maximalanzahl von Zählsensoren auf dem Fahrzeug (FZᵢ), auf mögliche Fahrgastzahlen der deshalb nicht vorhandenen Zähl-Sensoren auf dem Fahrzeug (FZᵢ) geschlossen wird, indem auf Basis der beiden Verteilungsstatistiken (VST₁, VST₂) ein Wert für das Ein-/Aussteigen an Türen in dem Fahrzeug (FZᵢ) ohne Zählsensoren auf Basis der Fahrgastzahlenwerte (FGZW) für das Ein-/Aussteigen an Türen in dem Fahrzeug (FZᵢ) mit den Zählsensoren (ZSᵢ, Z_{Si+1}, ZSᵢ₊₂,...) geschätzt wird, und/oder
**i3**) auf Basis der Fahrgastzahlenwerte (FGZW) für das Ein-/Aussteigen an Türen in dem Fahrzeug (FZᵢ) mit den Zählsensoren (ZSᵢ, Z_{Si+1}, ZSᵢ₊₂,...) auf die Verteilung von Fahrgästen in dem Fahrzeug (FZᵢ) geschlossen wird.

12. Fahrgastzählsystem (FGZS) nach Anspruch 11, **dadurch gekennzeichnet, dass**
die Fahrgastzähleinrichtung (FGZE) in dem Fahrgastzählsystem (FGZS) enthalten ist ("Option I").

13. Fahrgastzählsystem (FGZS) nach Anspruch 11, **dadurch gekennzeichnet, dass**
sich die Fahrgastzähleinrichtung (FGZE), ausgebildet als eine Cloud zum automatischen Zählen von Fahrgästen, außerhalb des Fahrgastzählsystems (FGZS) befindet ("Option II") und die Steuereinheit (STE) die Diagnosemeldung (DM) und die IST-Fahrgastzahlinformation (I-FGZI_{ZS,FZ}) an die als Cloud zum automatischen Zählen von Fahrgästen ausgebildete Fahrgastzähleinrichtung (FGZE) übermittelt.

14. Fahrgastzählsystem (FGZS) nach Anspruch 11 oder 12, **dadurch gekennzeichnet, dass**
die Steuereinheit (STE) die Verteilungsstatistiken (VST₁, VST₂), die IST-Fahrgastzahlinformation (I-FGZI_{ZS,FZ}) und die Diagnosemeldung (DM) an ein auf dem Fahrzeug (FZᵢ) befindliches internes Informationsabnehmer/Diagnosesystem (IADS_{INT}) übermittelt.

15. Fahrgastzählsystem (FGZS) nach Anspruch 13, **dadurch gekennzeichnet, dass**
die als Cloud zum automatischen Zählen von Fahrgästen ausgebildete Fahrgastzähleinrichtung (FGZE) die Verteilungsstatistiken (VST₁, VST₂), die IST-Fahrgastzahlinformation (I-FGZI_{ZS,FZ}) und die Diagnosemeldung (DM) an ein dem Fahrzeug (FZᵢ) zugeordnetes, außerhalb des Fahrzeugs (FZᵢ) befindliches externes Informationsabnehmer/Diagnosesystem (IADS_{EXT}) übermittelt.

16. Fahrgastzählsystem (FGZS) nach einem der Ansprüche 11 bis 15, **dadurch gekennzeichnet, dass**
die Strecken- und Fahrzeugdatenbank (SFDB) zur Speicherung der sensorfahrzeug- und fahrstreckenspezifische Zusatzinformationen (ZI_{SF,FS}), das Fahrtinformationssystem (FIS) mit den zeit- und ortsspezifische Fahrtinformationen (FI_{Z,O}), das Fahrzeuginformationssystem (FZIS) mit den Fahrzeuginformationen (FZI) und/oder das Kontextinformationssystem (KIS) mit den Kontextinformationen (KI) entweder in dem Fahrgastzählsystem (FGZS) enthalten sind oder dem Fahrgastzählsystem (FGZS) als Systemkomponenten zugeordnet sind, die sich auf dem Fahrzeug (FZᵢ) befinden oder aber außerhalb des Fahrzeugs (FZᵢ) angeordnet sind.

17. Fahrgastzählsystem (FGZS) nach einem der Ansprüche 11 bis 16, **dadurch gekennzeichnet, dass** die sensorfahrzeug- und fahrstreckenspezifischen Zusatzinformationen (ZI_{SF,FS}) Informationen über Haltestellen, Ortstrukturinformationen der Haltestellen und Informationen zur Montageposition der Zählsensoren (ZS) sind.

18. Fahrgastzählsystem (FGZS) nach einem der Ansprüche 11 bis 17, **dadurch gekennzeichnet, dass**
die zeit- und ortsspezifische Fahrtinformationen (FI_{Z,O}) angeben, an welcher Haltestelle, z.B. Bahnsteig, sich ein Fahrzeug (FZᵢ) aktuell befindet, an welchem Ort, z.B. Gleis, das Fahrzeug (FZᵢ) steht, wie das Fahrzeug (FZᵢ) relativ zur Haltestelle steht, wie die aktuelle Uhrzeit ist und wie viele Minuten Verspätung das Fahrzeug (FZᵢ) diesbezüglich hat.

19. Fahrgastzählsystem (FGZS) nach einem der Ansprüche 11 bis 18, **dadurch gekennzeichnet, dass**
die Fahrzeuginformationen (FZI) angeben, ob Störungen, z.B. Türstörungen, vorliegen, die den Fahrgastfluss beeinträchtigen, und ob das Fahrzeug (FZᵢ) ein Fahrzeug mit Mehrfachtraktion bildet, also ein Zug ist, und wie die einzelnen Wagen in diesem Fall gereiht sind.

20. Fahrgastzählsystem (FGZS) nach einem der Ansprüche 11 bis 19, **dadurch gekennzeichnet, dass**
die Kontextinformationen (KI) Informationen sind, die für die Fahrgastzahlinformationen (FGZI_{ZS,FZ}) relevant sind, so z.B. Termine für Großveranstaltungen oder Ferientermine.

21. Fahrzeug zur Fahrgastbeförderung, insbesondere im Schienen- und Straßenverkehr, **dadurch gekennzeichnet, dass** ein Fahrgastzählsystem (FGZS) nach einem der Ansprüche 11 bis 20 in das Fahrzeug zur Fahrgastbeförderung integriert ist.

## Claims

1. Sensor analysis method, in which
a) reference sensor messages (R-SN) containing sensor-specific identification information (IDI_{ZS}), sensor-specific and vehicle-specific passenger number information (FGZI_{ZS,FZ}) and sensor status data (SSD) are collected from counting sensors (ZS₁...ZSᵢ...ZSₙ) on vehicles (FZ₁...FZᵢ...FZₙ) for transporting passengers on routes, in particular on railways and roads, and aggregated,
**characterized in that**
b) sensor vehicle-specific and route-specific additional information (ZI_{SF,FS}) is collected and aggregated,
c) time-specific and location-specific journey information (FI_{Z,O}) is collected and aggregated,
d) vehicle information (FZI) is collected and aggregated,
e) context information (KI) is collected and aggregated,
f) measured data (MD) are generated from the information (ZI_{SF,FS} FI_{Z,O}, FZI, KI) collected and aggregated according to features b) to e),
g) a first distribution statistic (VST₁), indicating how entries/exits of passengers at doors of one vehicle (FZᵢ) of the vehicles (FZ₁...FZᵢ...FZₙ) are distributed, and a second distribution statistic (VST₂), indicating how the passengers are distributed in the vehicle (FZᵢ), are determined from the reference sensor messages (R-SN) using conventional algorithms for computing distribution statistics,
h) the two distribution statistics (VST₁, VST₂) are correlated with the measured data (MD) and a degree of correlation (KG) is determined and taken into consideration in the two distribution statistics (VST₁, VST₂),
i) an actual sensor message (I-SN) received in each case from at least one counting sensor (ZSᵢ, ZSᵢ₊₁, ZSᵢ₊₂, ...) of the counting sensors (ZS₁...ZSᵢ...ZSₙ) on the vehicle (FZᵢ) for transporting passengers on routes and containing sensor-specific actual identification information (I-IDI_{ZS}), sensor-specific and vehicle-specific actual passenger number information (I-FGZI_{ZS,FZ}) and an actual sensor status datum (I-SSD) are each analysed in relation to the two distribution statistics (VST₁, VST₂) such that
**i1**) when a passenger numerical value (FGZW) given by the respective actual passenger number information (I-FGZI_{ZS,FZ}) deviates from a further passenger numerical value (FGZW*) determined on the basis of the two distribution statistics (VST₁, VST₂), a diagnostic message (DM) is generated, and/or
**i2**) when the number of counting sensors (ZSᵢ, ZSᵢ₊₁, ZSᵢ₊₂, ...) of the counting sensors (ZS₁...ZSᵢ...ZSₙ) on the vehicle (FZᵢ) is less than a maximum number of counting sensors on the vehicle (FZᵢ), a conclusion is drawn as to possible passenger numbers for the counting sensors on the vehicle (FZᵢ) that are therefore not present by estimating a value for entries/exits at doors in the vehicle (FZᵢ) without counting sensors on the basis of the passenger numerical values (FGZW) for entries/exits at doors in the vehicle (FZᵢ) with the counting sensors (ZSᵢ, ZSᵢ₊₁, ZSᵢ₊₂, ...), on the basis of the two distribution statistics (VST₁, VST₂), and/or
**i3**) a conclusion is drawn as to the distribution of passengers in the vehicle (FZᵢ) on the basis of the passenger numerical values (FGZW) for entries/exits at doors in the vehicle (FZᵢ) with the counting sensors (ZSᵢ, ZSᵢ₊₁, ZSᵢ₊₂, ...) .

2. Method according to Claim 1, **characterized in that** the sensor vehicle-specific and route-specific additional information (ZI_{SF,FS}) is information about stops on the routes, local structural information about the stops and information about the mounting position of the counting sensors (ZS).

3. Method according to Claim 1 or 2, **characterized in that** the time-specific and location-specific journey information (FI_{Z,O}) indicates the stop, for example platform, at which a vehicle (FZᵢ) is currently located, the location, for example track, at which the vehicle (FZᵢ) is positioned, how the vehicle (FZᵢ) is positioned relative to the stop, what the current time is and how many minutes the vehicle (FZᵢ) is delayed with respect thereto.

4. Method according to one of Claims 1 to 3, **characterized in that**
the vehicle information (FZI) indicates whether there are faults, for example door faults, that impair the passenger flow, and whether the vehicle (FZᵢ) forms a multi-traction vehicle, that is to say a train, and how the individual carriages are ordered in this case.

5. Method according to one of Claims 1 to 4, **characterized in that**
the context information (KI) is information that is relevant to the passenger number information (FGZI_{ZS,FZ}), such as for example schedules for major events or holiday schedules.

6. Computer program product (CPP) for sensor analysis with a non-volatile, readable memory (SP) storing processor-readable control program commands of a program module (PGM) performing the sensor analysis, and a processor (PZ) connected to the memory (SP), which processor executes the control program commands of the program module (PGM) for sensor analysis and in the process
**a**) collects, in particular by loading in each case into the processor (PZ), and aggregates reference sensor messages (R-SN) containing sensor-specific identification information (IDI_{ZS}), sensor-specific and vehicle-specific passenger number information (FGZI_{ZS,FZ}) and sensor status data (SSD) from counting sensors (ZS₁...ZSᵢ...ZSₙ) on vehicles (FZ₁...FZᵢ...FZₙ) for transporting passengers on routes, in particular on railways and roads,
**characterized in that**
the processor (PZ) and the program module (PGM) are designed to perform the sensor analysis such that
**b**) sensor vehicle-specific and route-specific additional information (ZI_{SF,FS}) is collected, in particular by being loaded in each case into the processor (PZ), and aggregated,
**c**) time-specific and location-specific journey information (FI_{Z,O}) is collected, in particular by being loaded in each case into the processor (PZ), and aggregated,
**d**) vehicle information (FZI) is collected, in particular by being loaded in each case into the processor (PZ), and aggregated,
**e**) context information (KI) is collected, in particular by being loaded in each case into the processor (PZ), and aggregated,
**f**) measured data (MD) are generated from the information (ZI_{SF,FS} FI_{Z,O}, FZI, KI) collected and aggregated according to features **b**) to **e**),
**g**) a first distribution statistic (VST₁), indicating how entries/exits of passengers at doors of one vehicle (FZᵢ) of the vehicles (FZ₁...FZᵢ...FZₙ) are distributed, and a second distribution statistic (VST₂), indicating how the passengers are distributed in the vehicle (FZᵢ), are determined from the reference sensor messages (R-SN) using conventional algorithms for computing distribution statistics,
**h**) the two distribution statistics (VST₁, VST₂) are correlated with the measured data (MD) and a degree of correlation (KG) is determined and taken into consideration in the two distribution statistics (VST₁, VST₂),
**i**) an actual sensor message (I-SN) received in each case from at least one counting sensor (ZSᵢ, ZSᵢ₊₁, ZSᵢ₊₂, ...) of the counting sensors (ZS₁...ZSᵢ...ZSₙ) on the vehicle (FZᵢ) for transporting passengers on routes and containing sensor-specific actual identification information (I-IDI_{ZS}), sensor-specific and vehicle-specific actual passenger number information (I-FGZI_{ZS,FZ}) and an actual sensor status datum (I-SSD) are each analysed in relation to the two distribution statistics (VST₁, VST₂) such that
**i1**) when a passenger numerical value (FGZW) given by the respective actual passenger number information (I-FGZI_{ZS,FZ}) deviates from a further passenger numerical value (FGZW*) determined on the basis of the two distribution statistics (VST₁, VST₂), a diagnostic message (DM) is generated, and/or
**i2**) when the number of counting sensors (ZSᵢ, ZSᵢ₊₁, ZSᵢ₊₂, ...) of the counting sensors (ZS₁...ZSᵢ...ZSₙ) on the vehicle (FZᵢ) is less than a maximum number of counting sensors on the vehicle (FZᵢ), a conclusion is drawn as to possible passenger numbers for the counting sensors on the vehicle (FZᵢ) that are therefore not present by estimating a value for entries/exits at doors in the vehicle (FZᵢ) without counting sensors on the basis of the passenger numerical values (FGZW) for entries/exits at doors in the vehicle (FZᵢ) with the counting sensors (ZSᵢ, ZSᵢ₊₁, ZSᵢ₊₂, ...), on the basis of the two distribution statistics (VST₁, VST₂), and/or
**i3**) a conclusion is drawn as to the distribution of passengers in the vehicle (FZᵢ) on the basis of the passenger numerical values (FGZW) for entries/exits at doors in the vehicle (FZᵢ) with the counting sensors (ZSᵢ, ZSᵢ₊₁, ZSᵢ₊₂, ...) .

7. Computer program product (CPP) according to Claim 6, **characterized in that**
the sensor vehicle-specific and route-specific additional information (ZI_{SF,FS}) is information about stops on the routes, local structural information about the stops and information about the mounting position of the counting sensors (ZS).

8. Computer program product (CPP) according to Claim 6 or 7, **characterized in that**
the time-specific and location-specific journey information (FI_{Z,O}) indicates the stop, for example platform, at which a vehicle (FZᵢ) is currently located, the location, for example track, at which the vehicle (FZᵢ) is positioned, how the vehicle (FZᵢ) is positioned relative to the stop, what the current time is and how many minutes the vehicle (FZᵢ) is delayed with respect thereto.

9. Computer program product (CPP) according to one of Claims 6 to 8, **characterized in that**
the vehicle information (FZI) indicates whether there are faults, for example door faults, that impair the passenger flow, and whether the vehicle (FZᵢ) forms a multi-traction vehicle, that is to say a train, and how the individual carriages are ordered in this case.

10. Computer program product (CPP) according to one of Claims 6 to 9, **characterized in that**
the context information (KI) is information that is relevant to the passenger number information (FGZI_{ZS,FZ}), such as for example schedules for major events or holiday schedules.

11. Passenger counting system (FGZS) comprising
counting sensors (ZS₁...ZSᵢ...ZSₙ) on vehicles (FZ₁...FZᵢ...FZₙ) for transporting passengers on routes, in particular on railways and roads, and a control unit (STE) that contains a computer program product (CPP) for sensor analysis with a non-volatile, readable memory (SP) storing processor-readable control program commands of a program module (PGM) performing the sensor analysis, and a processor (PZ) connected to the memory (SP), which processor executes the control program commands of the program module (PGM) for sensor analysis, is connected to the counting sensors (ZS₁...ZSᵢ...ZSₙ) and forms therewith a common first functional unit (FE1), wherein the first functional unit (FE1) is designed such that
a) reference sensor messages (R-SN) containing sensor-specific identification information (IDI_{ZS}), sensor-specific and vehicle-specific passenger number information (FGZI_{ZS,FZ}) and sensor status data (SSD) of the counting sensors (ZS₁...ZSᵢ...ZSₙ) are collected, in particular by being loaded in each case into the processor (PZ), and aggregated,
**characterized in that**
the control unit (STE) is connected to a passenger counting device (FGZE) and forms therewith a common second functional unit (FE2), wherein the second functional unit (FE2) is designed such that
**b**) sensor vehicle-specific and route-specific additional information (ZI_{SF,FS}) is collected by a route and vehicle database (SFDB) in the control unit (STE), in particular by being loaded in each case into the processor (PZ), and aggregated,
**c**) time-specific and location-specific journey information (FI_{Z,O}) is collected by a journey information system (FIS) in the control unit (STE), in particular by being loaded in each case into the processor (PZ), and aggregated,
**d**) vehicle information (FZI) is collected by a vehicle information system (FZIS) in the control unit (STE), in particular by being loaded in each case into the processor (PZ), and aggregated,
**e**) context information (KI) is collected by a context information system (KIS) in the control unit (STE), in particular by being loaded in each case into the processor (PZ), and aggregated,
**f**) the control unit (STE) generates measured data (MD) from the information (ZI_{SF,FS}, FI_{Z,O}, FZI, KI) collected and aggregated according to features **b**) to **e**), and transmits them, together with the reference sensor messages (R-SN), to the passenger counting device (FGZE),
**g**) the passenger counting device (FGZE) determines a first distribution statistic (VST₁), indicating how entries/exits of passengers at doors of one vehicle (FZᵢ) of the vehicles (FZ₁...FZᵢ...FZₙ) are distributed, and a second distribution statistic (VST₂), indicating how the passengers are distributed in the vehicle (FZᵢ), from the reference sensor messages (R-SN) using conventional algorithms for computing distribution statistics,
**h**) the passenger counting device (FGZE) correlates the two distribution statistics (VST₁, VST₂) with the measured data (MD) and determines a degree of correlation (KG), which is taken into consideration in the two distribution statistics (VST₁, VST₂), and transmits the distribution statistics (VST₁, VST₂) to the control unit (STE),
**i**) the control unit (STE) analyses an actual sensor message (I-SN) received in each case from at least one counting sensor (ZSᵢ, ZSᵢ₊₁, ZSᵢ₊₂, ...) of the counting sensors (ZS₁...ZSᵢ...ZSₙ) on the vehicle (FZᵢ) for transporting passengers on routes and containing sensor-specific actual identification information (I-IDI_{ZS}), sensor-specific and vehicle-specific actual passenger number information (I-FGZI_{ZS,FZ}) and an actual sensor status datum (I-SSD) in relation to the two distribution statistics (VST₁, VST₂) in each case such that
**i1**) when a passenger numerical value (FGZW) given by the respective actual passenger number information (I-FGZI_{ZS,FZ}) deviates from a further passenger numerical value (FGZW*) determined on the basis of the two distribution statistics (VST₁, VST₂), a diagnostic message (DM) is generated, and/or
**i2**) when the number of counting sensors (ZSᵢ, ZSᵢ₊₁, ZSᵢ₊₂, ...) of the counting sensors (ZS₁...ZSᵢ...ZSₙ) on the vehicle (FZᵢ) is less than a maximum number of counting sensors on the vehicle (FZᵢ), a conclusion is drawn as to possible passenger numbers for the counting sensors on the vehicle (FZᵢ) that are therefore not present by estimating a value for entries/exits at doors in the vehicle (FZᵢ) without counting sensors on the basis of the passenger numerical values (FGZW) for entries/exits at doors in the vehicle (FZᵢ) with the counting sensors (ZSᵢ, ZSᵢ₊₁, ZSᵢ₊₂, ...), on the basis of the two distribution statistics (VST₁, VST₂), and/or
**i3**) a conclusion is drawn as to the distribution of passengers in the vehicle (FZᵢ) on the basis of the passenger numerical values (FGZW) for entries/exits at doors in the vehicle (FZᵢ) with the counting sensors (ZSᵢ, ZSᵢ₊₁, ZSᵢ₊₂, ...) .

12. Passenger counting system (FGZS) according to Claim 11, **characterized in that**
the passenger counting device (FGZE) is contained in the passenger counting system (FGZS) ("option I").

13. Passenger counting system (FGZS) according to Claim 11, **characterized in that**
the passenger counting device (FGZE), designed as a cloud for automatically counting passengers, is located outside the passenger counting system (FGZS) ("option II"), and the control unit (STE) transmits the diagnostic message (DM) and the actual passenger number information (I-FGZI_{ZS,FZ}) to the passenger counting device (FGZE) designed as a cloud for automatically counting passengers.

14. Passenger counting system (FGZS) according to Claim 11 or 12, **characterized in that**
the control unit (STE) transmits the distribution statistics (VST₁, VST₂), the actual passenger number information (I-FGZI_{ZS,FZ}) and the diagnostic message (DM) to an internal information receiver/diagnostic system (IADS_{INT}) located on the vehicle (FZᵢ) .

15. Passenger counting system (FGZS) according to Claim 13, **characterized in that**
the passenger counting device (FGZE) designed as a cloud for automatically counting passengers transmits the distribution statistics (VST₁, VST₂), the actual passenger number information (I-FGZI_{ZS,FZ}) and the diagnostic message (DM) to an external information receiver/diagnostic system (IADS_{EXT}) assigned to the vehicle (FZᵢ) and located outside the vehicle (FZᵢ).

16. Passenger counting system (FGZS) according to one of Claims 11 to 15, **characterized in that**
the route and vehicle database (SFDB) for storing the sensor vehicle-specific and route-specific additional information (ZI_{SF,FS}), the journey information system (FIS) comprising the time-specific and location-specific travel information (FI_{Z,O}), the vehicle information system (FZIS) comprising the vehicle information (FZI) and/or the context information system (KIS) comprising the context information (KI) either are contained in the passenger counting system (FGZS) or are assigned to the passenger counting system (FGZS) as system components that are located on the vehicle (FZᵢ) or else are arranged outside the vehicle (FZᵢ).

17. Passenger counting system (FGZS) according to one of Claims 11 to 16, **characterized in that**
the sensor vehicle-specific and route-specific additional information (ZI_{SF,FS}) is information about stops, local structural information about the stops and information about the mounting position of the counting sensors (ZS).

18. Passenger counting system (FGZS) according to one of Claims 11 to 17, **characterized in that**
the time-specific and location-specific journey information (FI_{Z,O}) indicates the stop, for example platform, at which a vehicle (FZᵢ) is currently located, the location, for example track, at which the vehicle (FZᵢ) is positioned, how the vehicle (FZᵢ) is positioned relative to the stop, what the current time is and how many minutes the vehicle (FZᵢ) is delayed with respect thereto.

19. Passenger counting system (FGZS) according to one of Claims 11 to 18, **characterized in that**
the vehicle information (FZI) indicates whether there are faults, for example door faults, that impair the passenger flow, and whether the vehicle (FZᵢ) forms a multi-traction vehicle, that is to say a train, and how the individual carriages are ordered in this case.

20. Passenger counting system (FGZS) according to one of Claims 11 to 19, **characterized in that**
the context information (KI) is information that is relevant to the passenger number information (FGZI_{ZS,FZ}), such as for example schedules for major events or holiday schedules.

21. Vehicle for transporting passengers, in particular on railways and roads, **characterized in that**
a passenger counting system (FGZS) according to one of Claims 11 to 20 is integrated into the vehicle for transporting passengers.

## Revendications

1. Procédé d'analyse de capteurs, dans lequel
**a)** sont collectées et agrégées par des capteurs de comptage (ZS₁...ZSᵢ...ZSₙ) sur des véhicules (FZ₁...FZᵢ...FZₙ) de transport de passagers lié aux voies de circulation, plus particulièrement dans le trafic routier et ferroviaire, des messages de capteurs de référence (R-SN) avec des informations d'identification (IDI_{ZS}) spécifiques au capteur contenues à l'intérieur, des informations de comptage de passagers (FGZI_{ZS,FZ}) spécifiques au capteur et au véhicule et des données d'état du capteur (SSD), **caractérisé en ce que**
**b)** des informations complémentaires spécifiques au véhicule capteur et aux voies de circulation (ZI_{SF,FS}) sont collectées et agrégées,
**c)** des informations relatives au trajet spécifiques au temps et au lieu (F_{Z,O}) sont collectées et agrégées,
**d)** des informations du véhicule (FZI) sont collectées et agrégées,
**e)** des informations contextuelles (KI) sont collectées et agrégées,
**f)** à partir des informations (ZI_{SF,FS}, FI_{Z,O}. FZI, KI) collectées et agrégées selon les caractéristiques **b)** à **e)**, des données de mesure (MD) sont générées,
**g)** à partir des messages de capteurs de référence (R-SN) à l'aide des algorithmes habituels pour calculer des statistiques de répartition sont déterminées une première statistique de répartition (VST₁) qui indique comment la montée/descente de passagers aux portes d'un véhicule (FZᵢ) des véhicules (FZ₁...FZᵢ...FZₙ) est répartie, et une deuxième statistique de répartition (VST₂) qui indique comment les passagers se répartissent dans le véhicule (FZᵢ),
**h)** les deux statistiques de répartition (VST₁, VST₂) sont mises en rapport avec les données de mesure (MD) et un degré de corrélation (KG) est déterminé qui est pris en compte dans les deux statistiques de répartition (VST₁, VST₂),
**i)** un message de capteur réel (I-SN) obtenu à chaque fois d'au moins un capteur de comptage (ZSᵢ, Z_{Si+1}, ZSᵢ₊₂, ...) des capteurs de comptage (ZS₁...ZSᵢ...ZSₙ) sur le véhicule (FZᵢ) de transport de passagers lié aux voies de circulation avec une information d'identification réelle (I-IDI_{ZS}) spécifique au capteur contenue à l'intérieur, une information réelle sur le nombre de passagers (I-FGZI_{ZS,FZ}) spécifique au capteur et au véhicule et une donnée réelle d'état du capteur (I-SSD), est analysé à chaque fois par rapport aux deux statistiques de répartition (VST₁, VST₂) de manière telle que
**i1)** lorsqu'une valeur du nombre de passagers (FGZW) donnée par l'information réelle sur le nombre de passagers (I-FGZI_{ZS,FZ}) respective diverge d'une autre valeur du nombre de passagers (FGZW*) déterminée sur la base des deux statistiques de répartition (VST₁, VST₂), un message de diagnostic (DM) est généré, et/ou
**i2)** lorsque le nombre de capteurs de comptage (ZSᵢ, Z_{Si+1}, ZSᵢ₊₂, ...) des capteurs de comptage (ZS₁...ZSᵢ...ZSₙ) sur le véhicule (FZᵢ) est inférieur à un nombre maximal de capteurs de comptage sur le véhicule (FZᵢ), il est déduit des nombres possibles de passagers des capteurs de comptage donc non présents sur le véhicule (FZᵢ), tandis que sur la base des deux statistiques de répartition (VST₁, VST₂) est estimée une valeur pour la montée/descente aux portes du véhicule (FZᵢ) sans capteurs de comptage sur la base des valeurs du nombre de passagers (FGZW) pour la montée/descente aux portes du véhicule (FZᵢ) avec les capteurs de comptage (ZSᵢ, Z_{Si+1}, ZSᵢ₊₂, ...), et/ou
**i3)** sur la base des valeurs du nombre de passagers (FGZW) pour la montée/descente aux portes du véhicule (FZᵢ) avec les capteurs de comptage (ZSᵢ, Z_{Si+1}, ZSᵢ₊₂, ...) est déduite la répartition des passagers dans le véhicule (FZᵢ).

2. Procédé selon la revendication 1, **caractérisé en ce que** les informations complémentaires spécifiques au véhicule capteur et aux voies de circulation (ZI_{SF,FS}) sont des informations sur les stations des voies de circulation, des informations sur la structure du lieu des stations et des informations sur la position de montage des capteurs de comptage (ZS).

3. Procédé selon la revendication 1 ou 2, **caractérisé en ce que** les informations relatives au trajet spécifiques au temps et au lieu (FI_{Z,O}) indiquent à quelle station, par exemple, quel quai se trouve actuellement un véhicule (FZᵢ), à quel lieu, par exemple, quelle voie est le véhicule (FZᵢ), comment se situe le véhicule (FZᵢ) par rapport à la station, quelle est l'heure actuelle et combien de minutes de retard a donc le véhicule (FZᵢ).

4. Procédé selon l'une des revendications 1 à 3, **caractérisé en ce que** les informations du véhicule (FZI) indiquent si des perturbations, par exemple, des dysfonctionnements de porte, existent, qui affectent le flux de passagers, et si le véhicule (FZᵢ) constitue un véhicule à traction multiple, est donc un train, et comment les différents wagons sont alignés dans ce cas.

5. Procédé selon l'une des revendications 1 à 4, **caractérisé en ce que** les informations contextuelles (KI) sont des informations qui sont pertinentes pour les informations de comptage de passagers (FGZI_{ZS,FZ}), ainsi, par exemple, des dates pour de grands évènements ou des dates de vacances.

6. Produit-programme informatique (CPP) pour l'analyse de capteurs avec une mémoire non volatile, lisible (SP) dans laquelle sont enregistrées des instructions du programme de commande lisibles par le processeur d'un module de programme (PGM) effectuant l'analyse de capteurs, et avec un processeur (PZ) relié à la mémoire (SP) qui exécute les instructions du programme de commande du module de programme (PGM) pour l'analyse de capteurs et ce faisant
**a)** collecte, plus particulièrement par chargement respectif dans le processeur (PZ), et agrège des messages de capteurs de référence (R-SN) avec des informations d'identification (IDI_{ZS}) spécifiques au capteur contenues à l'intérieur, des informations de comptage de passagers (FGZI_{ZS,FZ}) spécifiques au capteur et au véhicule et des données d'état du capteur (SSD) de capteurs de comptage (ZS₁...ZSᵢ...ZSₙ) sur des véhicules (FZ₁...FZᵢ...FZₙ) de transport de passagers lié aux voies de circulation, plus particulièrement dans le trafic routier et ferroviaire **caractérisé en ce que** le processeur (PZ) et le module de programme (PGM) pour effectuer l'analyse de capteurs sont conçus de manière telle que
**b)** des informations complémentaires spécifiques au véhicule capteur et aux voies de circulation (ZI_{SF,FS}) sont collectées, plus particulièrement par chargement respectif dans le processeur (PZ), et agrégées,
**c)** des informations relatives au trajet spécifiques au temps et au lieu (FI_{Z,O}) sont collectées, plus particulièrement par chargement respectif dans le processeur (PZ), et agrégées,
**d)** des informations du véhicule (FZI) sont collectées, plus particulièrement par chargement respectif dans le processeur (PZ), et agrégées,
**e)** des informations contextuelles (KI) sont collectées, plus particulièrement par chargement respectif dans le processeur (PZ), et agrégées,
**f)** à partir des informations (ZI_{SF,FS}, FI_{z,o}. FZI, KI) collectées et agrégées selon les caractéristiques **b)** à **e)**, des données de mesure (MD) sont générées,
**g)** à partir des messages de capteurs de référence (R-SN) à l'aide des algorithmes habituels pour calculer des statistiques de répartition sont déterminées une première statistique de répartition (VST₁) qui indique comment la montée/descente de passagers aux portes d'un véhicule (FZᵢ) des véhicules (FZ₁...FZᵢ...FZₙ) est répartie, et une deuxième statistique de répartition (VST₂) qui indique comment les passagers se répartissent dans le véhicule (FZᵢ),
**h)** les deux statistiques de répartition (VST₁, VST₂) sont mises en rapport avec les données de mesure (MD) et un degré de corrélation (KG) est déterminé qui est pris en compte dans les deux statistiques de répartition (VST₁, VST₂),
**i)** un message de capteur réel (I-SN) obtenu à chaque fois d'au moins un capteur de comptage (ZSᵢ, Z_{Si+1}, ZSᵢ₊₂, ...) des capteurs de comptage (ZS₁...ZSᵢ...ZSₙ) sur le véhicule (FZᵢ) de transport de passagers lié aux voies de circulation avec une information d'identification réelle (I-IDI_{ZS}) spécifique au capteur contenue à l'intérieur, une information réelle sur le nombre de passagers (I-FGZI_{ZS,FZ}) spécifique au capteur et au véhicule et une donnée réelle d'état du capteur (I-SSD), est analysé à chaque fois par rapport aux deux statistiques de répartition (VST₁, VST₂) de manière telle que
**i1)** lorsqu'une valeur du nombre de passagers (FGZW) donnée par l'information réelle sur le nombre de passagers (I-FGZI_{ZS,FZ}) respective diverge d'une autre valeur du nombre de passagers (FGZW*) déterminée sur la base des deux statistiques de répartition (VST₁, VST₂), un message de diagnostic (DM) est généré, et/ou
i2) lorsque le nombre de capteurs de comptage (ZSᵢ, Z_{Si+1}, ZSᵢ₊₂, ...) des capteurs de comptage (ZS₁...ZSᵢ...ZSₙ) sur le véhicule (FZᵢ) est inférieur à un nombre maximal de capteurs de comptage sur le véhicule (FZᵢ), il est déduit des nombres possibles de passagers des capteurs de comptage donc non présents sur le véhicule (FZᵢ), tandis que sur la base des deux statistiques de répartition (VST₁, VST₂) est estimée une valeur pour la montée/descente aux portes du véhicule (FZᵢ) sans capteurs de comptage sur la base des valeurs du nombre de passagers (FGZW) pour la montée/descente aux portes du véhicule (FZᵢ) avec les capteurs de comptage (ZSᵢ, Z_{Si+1}, ZSᵢ₊₂, ...), et/ou
**i3)** sur la base des valeurs du nombre de passagers (FGZW) pour la montée/descente aux portes du véhicule (FZᵢ) avec les capteurs de comptage (ZSᵢ, Z_{Si+1}, ZSᵢ₊₂, ...) est déduite la répartition des passagers dans le véhicule (FZᵢ).

7. Produit-programme informatique (CPP) selon la revendication 6, **caractérisé en ce que** les informations complémentaires spécifiques au véhicule capteur et aux voies de circulation (ZI_{SF,FS}) sont des informations sur les stations des voies de circulation, des informations sur la structure du lieu des stations et des informations sur la position de montage des capteurs de comptage (ZS).

8. Produit-programme informatique (CPP) selon la revendication 6 ou 7, **caractérisé en ce que** les informations relatives au trajet spécifiques au temps et au lieu (FI_{Z,O}) indiquent à quelle station, par exemple, quel quai se trouve actuellement un véhicule (FZᵢ), à quel lieu, par exemple, quelle voie est le véhicule (FZᵢ), comment se situe le véhicule (FZᵢ) par rapport à la station, quelle est l'heure actuelle et combien de minutes de retard a donc le véhicule (FZᵢ).

9. Produit-programme informatique (CPP) selon l'une des revendications 6 à 8, **caractérisé en ce que** les informations du véhicule (FZI) indiquent si des perturbations, par exemple, des dysfonctionnements de porte, existent, qui affectent le flux de passagers, et si le véhicule (FZᵢ) constitue un véhicule à traction multiple, est donc un train, et comment les différents wagons sont alignés dans ce cas.

10. Produit-programme informatique (CPP) selon l'une des revendications 6 à 9, **caractérisé en ce que** les informations contextuelles (KI) sont des informations qui sont pertinentes pour les informations de comptage de passagers (FGZI_{ZS,FZ}), ainsi, par exemple, des dates pour de grands évènements ou des dates de vacances.

11. Système de comptage de passagers (FGZS) avec
des capteurs de comptage (ZS₁...ZSᵢ...ZSₙ) sur des véhicules (FZ₁...FZᵢ...FZₙ) de transport de passagers lié aux voies de circulation, plus particulièrement dans le trafic routier et ferroviaire, et une unité de commande (STE) qui contient un produit-programme informatique (CPP) pour l'analyse de capteurs avec une mémoire non volatile, lisible (SP) dans laquelle sont enregistrées des instructions du programme de commande lisibles par le processeur d'un module de programme (PGM) effectuant l'analyse de capteurs, et avec un processeur (PZ) relié à la mémoire (SP) qui exécute les instructions du programme de commande du module de programme (PGM) pour l'analyse de capteurs, est reliée aux capteurs de comptage (ZS₁...ZSᵢ...ZSₙ) et forme avec ceux-ci une première unité fonctionnelle (FE1), la première unité fonctionnelle (FE1) étant conçue de manière telle que
**a)** des messages de capteurs de référence (R-SN) avec des informations d'identification (IDI_{ZS}) spécifiques au capteur contenues à l'intérieur, des informations de comptage de passagers (FGZI_{ZS,FZ}) spécifiques au capteur et au véhicule et des données d'état du capteur (SSD) de capteurs de comptage (ZS₁...ZSᵢ...ZSₙ) sont collectés, plus particulièrement par chargement respectif dans le processeur (PZ), et agrégés, **caractérisé en ce que**
l'unité de commande (STE) est reliée à un dispositif de comptage de passagers (FGZE) et forme avec celui-ci une deuxième unité fonctionnelle commune (FE2), la deuxième unité fonctionnelle (FE2) étant conçue de manière telle que
**b)** des informations complémentaires spécifiques au véhicule capteur et aux voies de circulation (ZI_{SF,FS}) d'une banque de données des voies et des véhicules (SFDB) sont collectées dans l'unité de commande (STE), plus particulièrement par chargement respectif dans le processeur (PZ), et agrégées,
**c)** des informations relatives au trajet spécifiques au temps et au lieu (FI_{Z,O}) d'un système d'informations de trajet (FIS) sont collectées dans l'unité de commande (STE), plus particulièrement par chargement respectif dans le processeur (PZ), et agrégées,
**d)** des informations du véhicule (FZI) d'un système d'informations du véhicule (FZIS) sont collectées dans l'unité de commande (STE), plus particulièrement par chargement respectif dans le processeur (PZ), et agrégées,
**e)** des informations contextuelles (KI) d'un système d'informations contextuelles (KIS) sont collectées dans l'unité de commande (STE), plus particulièrement par chargement respectif dans le processeur (PZ), et agrégées,
**f)** l'unité de commande (STE), à partir des informations (ZI_{SF,FS}, FI_{Z,O}. FZI, KI) collectées et agrégées selon les caractéristiques **b)** à **e)**, génère des données de mesure (MD) et transmet celles-ci au dispositif de comptage de passagers (FGZE) conjointement avec les messages de capteurs de référence (R-SN),
**g)** le dispositif de comptage de passagers (FGZE) détermine, à partir des messages de capteurs de référence (R-SN) à l'aide des algorithmes habituels pour calculer des statistiques de répartition, une première statistique de répartition (VST₁) qui indique comment la montée/descente de passagers aux portes d'un véhicule (FZᵢ) des véhicules (FZ₁...FZᵢ...FZₙ) est répartie, et une deuxième statistique de répartition (VST₂) qui indique comment les passagers se répartissent dans le véhicule (FZᵢ),
**h)** le dispositif de comptage de passagers (FGZE) met en rapport les deux statistiques de répartition (VST₁, VST₂) avec les données de mesure (MD) et détermine un degré de corrélation (KG) qui est pris en compte dans les deux statistiques de répartition (VST₁, VST₂), et transmet les statistiques de répartition (VST₁, VST₂) à l'unité de commande (STE),
**i)** l'unité de commande (STE) analyse à chaque fois un message de capteur réel (I-SN) obtenu à chaque fois d'au moins un capteur de comptage (ZSᵢ, Z_{Si+1}, ZSᵢ₊₂, ...) des capteurs de comptage (ZS₁...ZSᵢ...ZSₙ) sur le véhicule (FZᵢ) de transport de passagers lié aux voies de circulation avec une information d'identification réelle (I-IDI_{ZS}) spécifique au capteur contenue à l'intérieur, une information réelle sur le nombre de passagers (I-FGZI_{ZS,FZ}) spécifique au capteur et au véhicule et une donnée réelle d'état du capteur (I-SSD), par rapport aux deux statistiques de répartition (VST₁, VST₂) de manière telle que
**i1)** lorsqu'une valeur du nombre de passagers (FGZW) donnée par l'information réelle sur le nombre de passagers (I-FGZI_{ZS,FZ}) respective diverge d'une autre valeur du nombre de passagers (FGZW*) déterminée sur la base des deux statistiques de répartition (VST₁, VST₂), un message de diagnostic (DM) est généré, et/ou
**i2)** lorsque le nombre de capteurs de comptage (ZSᵢ, Z_{Si+1}, ZSᵢ₊₂, ...) des capteurs de comptage (ZS₁...ZSᵢ...ZSₙ) sur le véhicule (FZᵢ) est inférieur à un nombre maximal de capteurs de comptage sur le véhicule (FZᵢ), il est déduit des nombres possibles de passagers des capteurs de comptage donc non présents sur le véhicule (FZᵢ), tandis que sur la base des deux statistiques de répartition (VST₁, VST₂) est estimée une valeur pour la montée/descente aux portes du véhicule (FZᵢ) sans capteurs de comptage sur la base des valeurs du nombre de passagers (FGZW) pour la montée/descente aux portes du véhicule (FZᵢ) avec les capteurs de comptage (ZSᵢ, Z_{Si+1}, ZSᵢ₊₂, ...), et/ou
**i3)** sur la base des valeurs du nombre de passagers (FGZW) pour la montée/descente aux portes du véhicule (FZᵢ) avec les capteurs de comptage (ZSᵢ, Z_{Si+1}, ZSᵢ₊₂, ...) est déduite la répartition des passagers dans le véhicule (FZᵢ).

12. Système de comptage de passagers (FGZS) selon la revendication 11, **caractérisé en ce que** le dispositif de comptage de passagers (FGZE) est compris dans le système de comptage de passagers (FGZS) (« Option I »).

13. Système de comptage de passagers (FGZS) selon la revendication 11, **caractérisé en ce que** le dispositif de comptage de passagers (FGZE), conçu comme un cloud pour le comptage automatique de passagers, se trouve à l'extérieur du système de comptage de passagers (FGZS) (« option II ») et l'unité de commande (STE) transmet le message de diagnostic (DM) et l'information réelle sur le nombre de passagers (I-FGZI_{ZS,FZ}) au dispositif de comptage de passagers (FGZE) conçu comme un cloud pour le comptage automatique de passagers.

14. Système de comptage de passagers (FGZS) selon la revendication 11 ou 12, **caractérisé en ce que** l'unité de commande (STE) transmet les statistiques de répartition (VST₁, VST₂), l'information réelle sur le nombre de passagers (I-FGZI_{ZS,FZ}) et le message de diagnostic (DM) à un acquéreur d'informations/système de diagnostic (IADS_{INT}) interne se trouvant sur le véhicule (FZᵢ).

15. Système de comptage de passagers (FGZS) selon la revendication 13, **caractérisé en ce que** le dispositif de comptage de passagers (FGZE) conçu comme un cloud pour le comptage automatique de passagers, transmet les statistiques de répartition (VST₁, VST₂), l'information réelle sur le nombre de passagers (I-FGZI_{ZS,FZ}) et le message de diagnostic (DM) à un acquéreur d'informations/système de diagnostic (IADS_{EXT}) externe se trouvant à l'extérieur du véhicule (FZᵢ), affecté au véhicule (FZᵢ).

16. Système de comptage de passagers (FGZS) selon l'une des revendications 11 à 15, **caractérisé en ce que** la banque de données des voies et des véhicules (SFDB) pour l'enregistrement des informations complémentaires spécifiques au véhicule capteur et aux voies de circulation (ZI_{SF,FS}), le système d'informations de trajet (FIS) avec les informations relatives au trajet spécifiques au temps et au lieu (FI_{Z,O}), le système d'informations du véhicule (FZIS) avec les informations du véhicule (FZI) et/ou le système d'informations contextuelles (KIS) avec les informations contextuelles (KI) soit sont contenus dans le système de comptage de passagers (FGZS), soit sont affectés au système de comptage de passagers (FGZS) en tant que composants du système, qui se trouvent sur le véhicule (FZᵢ) ou encore sont disposés à l'extérieur du véhicule (FZᵢ).

17. Système de comptage de passagers (FGZS) selon l'une des revendications 11 à 16, **caractérisé en ce que** les informations complémentaires spécifiques au véhicule capteur et aux voies de circulation (ZI_{SF,FS}) sont des informations sur les stations, des informations sur la structure du lieu des stations et des informations sur la position de montage des capteurs de comptage (ZS) .

18. Système de comptage de passagers (FGZS) selon l'une des revendications 11 à 17, **caractérisé en ce que** les informations relatives au trajet spécifiques au temps et au lieu (FI_{Z,O}) indiquent à quelle station, par exemple, quel quai se trouve actuellement un véhicule (FZᵢ), à quel lieu, par exemple, quelle voie est le véhicule (FZᵢ), comment se situe le véhicule (FZᵢ) par rapport à la station, quelle est l'heure actuelle et combien de minutes de retard a donc le véhicule (FZᵢ).

19. Système de comptage de passagers (FGZS) selon l'une des revendications 11 à 18, **caractérisé en ce que** les informations du véhicule (FZI) indiquent si des perturbations, par exemple, des dysfonctionnements de porte, existent, qui affectent le flux de passagers, et si le véhicule (FZᵢ) constitue un véhicule à traction multiple, est donc un train, et comment les différents wagons sont alignés dans ce cas.

20. Système de comptage de passagers (FGZS) selon l'une des revendications 11 à 19, **caractérisé en ce que** les informations contextuelles (KI) sont des informations qui sont pertinentes pour les informations de comptage de passagers (FGZI_{ZS,FZ}), ainsi, par exemple, des dates pour de grands évènements ou des dates de vacances.

21. Véhicule de transport de passagers, plus particulièrement dans le trafic routier et ferroviaire, **caractérisé en ce qu'**un système de comptage de passagers (FGZS) selon l'une des revendications 11 à 20 est intégré dans le véhicule de transport de passagers.
